# EUROPEAN PATENT APPLICATION

(11) **EP 4 186 694 A1**
(43) Date of publication of application: **31.05.2023**
(21) Application number: 21211055.5
(22) Date of filing: 29.11.2021
(51) Int. Cl.: B32B 17/10

(54) **INTERLAYER FILMS WITH UV PROTECTION FOR LAMINATED SAFETY GLASS**

(71) Applicant: Kuraray Europe GmbH, 65795 Hattersheim (DE)
(72) Inventor: Lellig, Philipp, 50670 Köln (DE)
(74) Representative: Janßen, Christian Oliver

(57) **Abstract**

The invention relates to plasticized interlayer films based on polyvinyl acetal comprising certain UV absorbers and UV stabilizers.

## Description

The invention relates to plasticized interlayer films based on polyvinyl acetal comprising certain UV absorbers and certain UV stabilizers.

For many decades, commercially available plasticized polyvinyl butyral (PVB) film for laminated glazing has been supplied with UV absorbers to block a portion of the UV radiation from the natural light. This is a simple way of ensuring protection against harmful UV radiation for people or objects behind the laminated glass.

UV-326 is a derivative of benzotriazole is widely used as UV absorber in such laminates and known for its outstanding long-term stability and high absorption performance in almost the entire UV range. Furthermore, it can be introduced into the film formulation in a particularly simple manner during extrusion, since it is relatively soluble in the commonly used plasticizers used for PVB and can thus be easily added to the plasticizer prior to extrusion. However, UV-326 is under evaluation for potential health or environmental issues.

Dibenzoylmethane (or 1,3-diphenyl-1,3-propanedione)derivatives like 3-(4-tert-butylphenyl)-1-(4-methoxyphenyl)propane-1,3-dione (also called "avobenzone") is known as potent UV absorber and used widely in sunscreens and other cosmetic applications. However, it is also known that avobenzone is unstable when exposed to UV light. It degrades in a matter of hours, making it not usable for applications in laminated glass.

Thus, one objective of the present invention was to provide interlayer films with a better risk profile, better stability, especially better stability under UV irradiation, and/or better UV absorption.

These and other objectives have been solved by the present invention.

Accordingly, a first aspect of the present invention concerns an interlayer film for laminated glass comprising at least one polyvinyl acetal, at least one plasticizer, at least one substituted 1,3-diphenyl-1,3-propanedione UV absorber and at least one UV stabilizer.

Preferably, the 1,3-diphenyl-1,3-propanedione UV absorber is substituted with at least one alkyl and/or at least one alkyloxy group. More preferably, the alkyl group is a C1 to C6 unsubstituted alkyl group, most preferably a tert-butyl group. The alkoxy group is more preferably a C1 to C6 unsubstituted alkoxy group, most preferably a methoxy group.

Most preferably, the 1,3-diphenyl-1,3-propanedione UV absorber is 3-(4-tert-butylphenyl)-1-(4-methoxyphenyl)propane-1,3-dione.

It has now been surprisingly found by the present inventors that UV absorbers of the dibenzoylmethane type, which are usually very sensitive to UV light, can be stabilized by certain UV stabilizers. The term "UV stabilizer" as used herein shall denote a chemical compound which can decrease the decomposition of the dibenzoylmethane type UV absorber.

Suitable UV stabilizers are selected from the following groups:
- benzotriazols, for example 2-(3-tert-butyl-2-hydroxy-5-methylphenyl)-5-chlorobenzotriazole (CAS: 3896-11-5), 2-(2H-benzotriazol-2-yl)-4,6-bis(1-phenylethyl-1-methyl)phenol (CAS: 70321-86-7), 3-[3-(2H-benzotriazol-2-yl)-5-(1,1-dimethylethyl)-4-hydroxyphenyl]propionate (CAS: 127519-17-9), 2-(2H-benzotriazol-2-yl)-6-dodecyl-4-methylphenol (CAS: 125304-04-3), 2-(2'-hydroxy-5'-methylphenyl)benzotriazol (CAS: 2440-22-4), 2-(2-hydroxy-5-tert-octylphenyl)benzotriazole (CAS: 3147-75-9), bis-[3-(2H-benzotriazol-2-yl)-2-hydroxy-5-(1,1,3,3-tetramethylbutyl)-phenyl]-methan (CAS: 103597-45-1), 2-(2H-benzotriazol-2-yl)-6-(1-methyl-1-phenylethyl)-4-(1,1,3,3-tetramethylbutyl)phenol (CAS: 73936-91-1), mixture of α-3-(3-(2H-benzotriazol-2-yl)-5-tert-butyl-4-hydroxyphenyl)propionyl-ω-hydroxypoly(oxyethylene) and α-3-(3-(2H-benzotriazol-2-yl)-5-tert-butyl-4-hydroxyphenyl)propionyl-ω-3-(3-(2H-benzotriazol-2-yl)-5-tert-butyl-4-hydroxyphenyl)propionyloxypoly(oxyethylene) (CAS: 104810-48-2 ; 104810-47-1), mixture of octyl-3-[3-tert-butyl-4-hydroxy-5-(5-chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate (CAS: 83044-89-7; 83044-90-0), 2-(2'-hydroxy-3',5'-di-tert-amylphenyl)benzotriazole (CAS: 25973-55-1)
- benzophenones, for example 2,2'-dihydroxy-4,4'-dimethoxybenzophenone (CAS: 131-54-4), 2-hydroxy-4-methoxybenzophenone (CAS: 131-57-7), 2-hydroxy-4-N-octyloxybenzophenone (CAS: 1843-05-6), diethylaminohydroxybenzoylhexylbenzoate (CAS: 302776-68-7), 2,2'-dihydroxy-4-methoxybenzophenone (CAS: 131-53-3), 2-ethylhexyl 2-hydroxybenzoate (CAS: 118-60-5)
- cyanoacrylates, for example 2-ethylhexyl 2-cyano-3,3-diphenylacrylate (CAS: 6197-30-4), ethyl-2-cyano-3-(4-hydroxy-3-methoxyphenyl)acrylate (CAS: 13373-29-0), 2,2-bis(((2-cyano-3,3-diphenylacryloyl)oxy)methyl)propane-1,3-diyl bis(2-cyano-3,3-diphenylacrylate) (CAS: 178671-58-4), ethyl-2-cyano-3,3-diphenylacrylate (CAS: 5232-99-5), bis[3-(2-cyano-3,3-diphenylprop-2-enoyl)oxy-2,2-dimethylpropyl]hexanedioate (CAS: 862993-96-2), ethylhexylmethoxycrylene (CAS: 947753-66-4)
- phenyltriazines, for example 2,4-diphenyl-6-[2-hydroxy-4-(hexyloxy)phenyl]-1,3,5-triazine (CAS: 147315-50-2), 2,4-Bis[4-(2-ethylhexyloxy)-2-hydroxyphenyl]-6-(4-methoxyphenyl)-1,3,5-triazine (CAS: 187393-00-6), 2-(2-hydroxy-4-(2-ethylhexyl)oxy)phenyl-4,6-bis(4-phenyl)phenyl-1,3,5-triazine (CAS: 204583-39-1), ,2,2-(1,3,5-Triazine-2,4,6-triyl)tris[5-(hexyloxy)-6-methylphenol] (CAS: 222529-65-9)
- benzoxazinones, for example 2,2'-(1,4-phenylene)bis-4H-3,1-benzoxazin-4-one (CAS: 18600-59-4)
- derivatives of camphor, for example 4-methylbenzylidene camphor (CAS: 36861-47-9), terephthalylidenedicamphorsulfonicacid (CAS: 92761-26-7)
- benzoates, for example 2-butyloctyl 2-hydroxybenzoate (CAS: 190085-41-7), hexadecylbenzoate (CAS: 22485-54-7), butyloctylbenzoate (CAS: 188038-97-3)
- derivatives of silicones and polysilicones, for example undecylcrylene dimethicone (CAS: 948847-35-6), Polysilicone-15 (CAS: 207574-74-1)
- naphthalates, for example diethylhexyl-2,6-naphthalate (CAS: 127474-91-3)
- quinones, for example 6-all-trans-decaprenyl-2,3-dimethoxy-5-methyl-1,4-benzochinon (CAS: 303-98-0)
- thiols, for example 2-amino-5-{[1-((carboxymethyl)amino)-1-oxo-3-sulfanylprop-2-yl]amino}-5-oxovaleriansäure (CAS: 70-18-8)
- methylated phenols, for example (2R)-2,5,7,8-tetramethyl-2-[(4R,8R)-4,8,12-trimethyltridecyl]-3,4-dihydro-2H-chromen-6-ol (CAS: 10191-41-0)
- derivatives of furanes, for example (5R)-[(1S)-1,2-dihydroxyethyl]-3,4-dihydroxyfuran-2(5H)-one (CAS: 50-81-7)

Accordingly, the UV stabilizer is preferably chosen from a benzotriazole, a benzophenone, a phenyltriazine, a benzoxazinones, a quinone or a derivative of camphor, benzoic acid, silicone, naphthalic acid, or furane.

More preferably, the UV stabilizer is a benzotriazole and specifically, most preferably, the UV stabilizer is a hydroxybenzyl benzotriazole and specifically 2-(2H-benzotriazol-2-yl)-4,6-bis(1-methyl-1-phenylethyl)phenol.

The polyvinyl acetal used in accordance with the invention results in particular from the reaction of at least one polyvinyl alcohol with one or more aliphatic unbranched aldehyde containing 2 to 10 carbon atoms. To this end, n-butyraldehyde is preferably used and the preferred polyvinyl acetal is PVB.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The inventive interlayer films comprise at least one plasticizer. Preferably, such plasticizer(s) can be selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid. By definition, plasticisers are organic liquids having a high boiling point. For this reason, further types of organic liquids having a boiling point above 120 °C can also be used as plasticiser.

The interlayer film comprises at least 22 wt%, such as 22.0 to 45.0 wt%, preferably 25.0 to 32.0 wt% and in particular 25.0 to 30.0 wt%.

Additionally, the interlayer film contain further additives, such as residual quantities of water, adhesion regulators, optical brighteners or fluorescent additives, colourants, processing aids, inorganic or organic nanoparticles, pyrogenic silicic acid and/or surface active substances.

Another aspect of the present invention is the use of the interlayer film described above for the manufacture of laminated glass, especially for the manufacture of museum glazing, shop window glazing, as motor vehicle glazing, aircraft glazing, in photovoltaic modules in LED or OLED screens, televisions, computer screens, large screens), in electrochromic, photochromic, photoelectrochromic glass elements.

Yet another aspect of the present invention is laminated glass comprising the interlayer film described above.

The lamination step for producing the laminated glass is preferably carried out such that the interlayer film is positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours.

Vacuum laminators may also be used. These consist of a chamber that can be heated and evacuated, in which laminated glass can be laminated within 30 - 60 minutes. Reduced pressures from 0.01 to 300 mbar and temperatures from 100 to 200 °C, in particular 130 - 160 °C, have proven their worth in practice.

The glass film laminate may then be subjected to an autoclave process.

### Examples

### Measurement of the yellowness index

In order to quantify the yellowness of the interlayer film, the difference in yellowness index dYI (= YI(glass laminate)-YI(two glass panes without interlayer)) was measured according to ASTM E313 using a ColorQuest XE spectrophotometer in a geometry of 2° and illuminant type C.

### Measurement of the haze

The haze value according to ASTM 1003 procedure B was measured on glass laminates using a ColorQuest XE spectrophotometer in a geometry of 2° and illuminant type C.

### Measurement of light transmission

The light transmission according to EN 410:2011 was measured on glass laminates using a Perkin-Elmer Lambda 950 UV-/VIS-spectrophotometer.

### Measurement of the UV-transmission

The UV-transmission according to ISO 13837 Convention A (300 - 400 nm) was measured on glass laminates using a Perkin-Elmer Lambda 950 UV-/VIS-spectrophotometer.

### Testing of light stability

To test their light stability, laminates were placed in a Q-Sun Xenon radiation chamber for 4 days. The test condition of the radiation chamber were chosen according to the "Kalahari" test program PV3929:
Filter: Daylight-Q (X-7460)
Radiation intensity @ 340 nm: 0.60 W/m2
Black standard temperature: 90°C
Chamber temperature: 50°C
Rel. humidity: 20%

### Preparation of the interlayer films

PVB-films with compositions as listed in table 1 were prepared. UV absorber 3-(4-tert-butylphenyl)-1-(4-methoxyphenyl)propane-1,3-dione (Milestab^{®} 1789, CAS: 70356-09-1), UV stabilizer 2-(2H-benzotriazol-2-yl)-4,6-bis(1-methyl-1-phenylethyl)phenol (Milestab^{®} 234-PD, CAS: 70321-86-7), and reference UV absorber Milestab^{®} 326-PD (CAS: 3896-11-5) are commercially available from MPI Chemie B.V.. The interlayer films were produced by film extrusion using a Leistritz co-rotating double-screw extruder. The films were extruded through a flat slit die with a slit width of 1100 mm and cooled down in a water basin. The obtained film showed a thickness of around 0.76 mm.

Test laminates were produced using one layer of PVB-film in a thickness of around 0.76 mm sandwiched between two conventional 2.1 mm automotive grade soda lime glasses (PlaniClear^{®}) in an autoclave containing the following steps: 30 min heating phase with pressurization up to 12 bar, 30 min hold time at 12 bar and 140 °C., and 30 min cooling down phase to 40 °C with concomitant release of pressure.

The test laminates were tested as such ("pristine sample") and after subjected to a light stability test as described herebefore.

**Table 1: Compositions and test results**

| | **E1** | **C1** | **C2** | **C3** |
|---|---|---|---|---|
| **Recipe** | | | | |
| PVB / wt% | 72.5 | 72.5 | 72.5 | 72.5 |
| 3G8 / wt% | 27.5 | 27.5 | 27.5 | 27.5 |
| Mg(2+)-salt / wt% | 0.12 | 0.12 | 0.12 | 0.12 |
| Milestab^{®} 1789 / wt% | 0.17 | 0.17 | - | - |
| Milestab^{®} 234-PD / wt% | 0.17 | - | 0.17 | - |
| Milestab^{®} 326-PD / wt% | - | - | - | 0.15 |
| Songnox^{®} 2450 / wt% | 0.0365 | 0.0365 | 0.0365 | 0.0365 |

| **Pristine sample** | | | | |
|---|---|---|---|---|
| dYI | 0.63 | 0.52 | 0.09 | 0.57 |
| Haze / % | <0.25 | <0.25 | <0.25 | <0.25 |
| Light Transmission / % | 90.5 | 90.5 | 90.7 | 90.6 |
| UV-Transmission / % | 1.6 | 2.0 | 15.2 | 3.5 |

| **After irradiation** | | | | |
|---|---|---|---|---|
| dYI | 0.69 | 0.23 | 0.05 | 0.59 |
| Haze / % | <0.25 | <0.25 | <0.25 | <0.25 |
| Light Transmission / % | 90.3 | 90.3 | 90.4 | 90.3 |
| UV-Transmission / % | 3.0 | 36.7 | 15.1 | 3.5 |

The results of the measurements of the test laminates are given in table 1.

Comparative example C1 shows that the 1,3-diphenyl-1,3-propanedione UV absorber Milestab^{®} 1789 alone decomposes substantially after the light stability test leading to an increase in UV transmission from 2.0 to 36.7 %.

Example E1 in which the interlayer film comprises both the 1,3-diphenyl-1,3-propanedione UV absorber Milestab^{®} 1789 as well as the benzotriazole UV stabilizer Milestab^{®} 234-PD shows much better stability with an increase of the UV transmission from 1.6 to only 3.0 %.

Comparative example C2 shows that the benzotriazole UV stabilizer Milestab^{®} 234-PD alone is insufficient to block enough UV light both before and after the light stability test and needs to be used with the 1,3-diphenyl-1,3-propanedione UV absorber to block enough UV light for practical use.

A comparison with comparative example C3 shows that even after the light stability test, the combination of 1,3-diphenyl-1,3-propanedione UV absorber and benzotriazole UV stabilizer in example E1 leads to results in the same range as the commonly used UV absorber Milestab^{®} 326-PD.

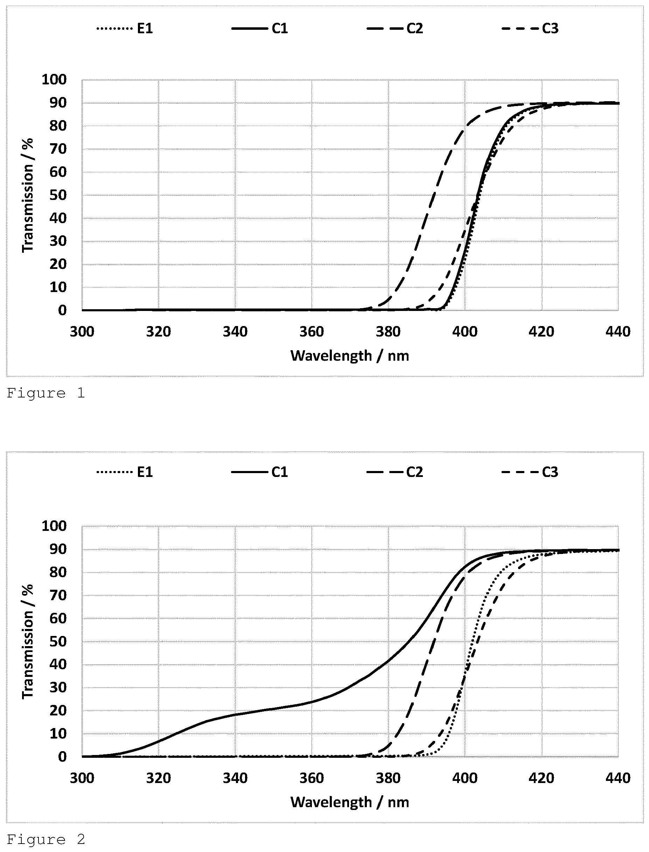

Figure 1 shows the transmission as a function of wavelength of the pristine samples.

Figure 2 shows the transmission as a function of wavelength after the light stability test.

The curves for E1 as compared to C1 clearly shows that the UV stabilizer protects the Milestab^{®} 1789 from degradation.

## Claims

1. An interlayer film for laminated glass comprising at least one polyvinyl acetal, at least one plasticizer, at least one substituted 1, 3-diphenyl-1,3-propanedione UV absorber and at least one UV stabilizer.

2. The interlayer film according to claim 1 wherein the 1,3-diphenyl-1,3-propanedione UV absorber is substituted with at least one alkyl and/or at least one alkyloxy group.

3. The interlayer film according to claim 1 or 2 wherein the 1,3-diphenyl-1,3-propanedione UV absorber is 3-(4-tert-butylphenyl)-1-(4-methoxyphenyl)propane-1,3-dione.

4. The interlayer film according to any one of claims 1 to 3 wherein the UV stabilizer is chosen from a benzotriazole, a benzophenone, a phenyltriazine, a benzoxazinone, a quinone or a derivative of camphor, benzoic acid, silicone, naphthalic acid, or furane.

5. The interlayer film according to any one of claims 1 to 4 wherein the UV stabilizer is a benzotriazole.

6. The interlayer film according to any one of claims 1 to 5 wherein the UV stabilizer is a hydroxybenzyl benzotriazole.

7. The interlayer film according to any one of claims 1 to 6 wherein the UV stabilizer is a 2-(2H-benzotriazol-2-yl)-4,6-bis(1-methyl-1-phenylethyl)phenol.

8. The interlayer film according to any one of claims 1 to 7 wherein the polyvinyl acetal is polyvinyl butyral.

9. The interlayer film according to any one of claims 1 to 8 wherein the plasticizer is present in the interlayer film in an amount of 25 to 30 wt%.

10. The interlayer film according to any one of claims 1 to 9 wherein the only plasticizer present in the interlayer film is triethylene glycol bis (2-ethylhexanoate).

11. Use of the interlayer film according to any one of claims 1 to 10 for the manufacture of laminated glass.

13. The use according to claim 11 for the manufacture of museum glazing, shop window glazing, as motor vehicle glazing, aircraft glazing, in photovoltaic modules in LED or OLED screens, televisions, computer screens, large screens), in electrochromic, photochromic, photoelectrochromic glass elements.

14. A laminated glass comprising the interlayer film according to any one of the claims 1 to 11.
